# EUROPEAN PATENT APPLICATION

(11) **EP 3 530 759 A2**
(43) Date of publication of application: **28.08.2019**
(21) Application number: 19156151.3
(22) Date of filing: 08.02.2019
(51) Int. Cl.: C21D 6/00, B22F 5/00, C21D 6/02, C21D 1/18, C22C 1/04, C22C 19/05, C22F 1/10

(54) **METHOD OF MANUFACTURE**

(30) Priority: 22.02.2018 GB 201802839
(71) Applicant: Rolls-Royce plc, London SW1E 6AT (GB)
(72) Inventor: Pardhi, Yogiraj, Derby, Derbyshire DE24 8BJ (GB)
(74) Representative: Rolls-Royce plc

(57) **Abstract**

A method of manufacture of an article or component comprising: providing an intermediate article or component comprising, or consisting essentially of, a precipitation strengthened alloy; and treating the intermediate article or component in accordance with a predetermined heat treatment schedule comprising: a solution treatment step (2), wherein the intermediate article is held at a solution temperature for a first predetermined period of time, the solution temperature being above a γ' solvus temperature (7) and below a solidus temperature (6) for the precipitation strengthened alloy; and a first cooling step (3), wherein the intermediate article is cooled at a first cooling rate of up to 20°C per minute from the solution temperature to an aging temperature, the aging temperature being below the γ' solvus temperature (7) for the precipitation strengthened alloy.

## Description

The present disclosure concerns a method of manufacture of an article or component, in particular an article or component comprising, or consisting essentially of, an alloy such as a precipitation strengthened alloy. The present disclosure concerns a heat treatment for a precipitation strengthened alloy. The present disclosure also concerns articles or components comprising, or consisting essentially of, alloys such as precipitation strengthened alloys and their uses, e.g. in turbine applications.

Precipitation strengthened nickel alloys are used in high temperature turbine applications, e.g. in gas turbine engines for aircraft. For example, γ' strengthened nickel superalloys may possess a desirable combination of creep strength, thermal stability, weldability and fabricability, which may make them suitable for use in high temperature structural applications in gas turbine engines.

It is known for a precipitation strengthened nickel alloy to be provided in a wrought or cast solution-annealed condition, in which the alloy is readily formable. The alloy may be formed to produce an article or component. An age hardening treatment is then carried out on the article or component to put the alloy into its high-strength condition. The age hardening treatment is typically a heat treatment comprising a plurality of steps.

Typically, the precipitation strengthened nickel alloy may undergo a solution heat treatment, which is carried out at a temperature of 150°C or more below the alloy solidus temperature. For precipitation strengthened nickel alloys the solution heat treatment temperature may be above or below the solvus temperature for a strengthening phase. The strengthening phase may be γ' or γ" in nickel alloys. The solvus temperature is defined as a temperature at which the strengthening phase goes 100% into solution. A two-step age hardening treatment comprises: (i) a stabilisation or primary aging step; and (ii) a final aging step. The stabilisation or primary aging step is carried out at a temperature lower than that at which the solution heat treatment is carried out. The final aging step is carried out at a temperature lower than that at which the stabilisation or primary aging step is carried out. The stabilisation or primary aging step may last longer than the solution heat treatment. The final aging step may last longer than the stabilisation or primary aging step. The stabilisation or primary aging step may be carried out at a temperature close to the γ' solvus temperature and may last for around two to four hours. The final aging step may be carried out at a temperature of from 700 to 900°C and may last for around eight to 24 hours. The exact temperatures and times employed for the steps of the heat treatment will vary depending upon which precipitation strengthened nickel alloy is being processed.

Aging may also be known as age hardening, precipitation hardening or particle hardening.

A first aspect provides a method of manufacture of an article or component comprising:
providing an intermediate article or component comprising, or consisting essentially of, a precipitation strengthened alloy; and
treating the intermediate article or component in accordance with a predetermined heat treatment schedule comprising:
   a solution treatment step, wherein the intermediate article is held at a solution temperature for a first predetermined period of time, the solution temperature being above a γ' solvus temperature and below a solidus temperature for the precipitation strengthened alloy; and
   a first cooling step, wherein the intermediate article is cooled at a first cooling rate of up to 20°C per minute from the solution temperature to an aging temperature, the aging temperature being below the γ' solvus temperature for the precipitation strengthened alloy.

The first cooling rate may be up to or at least 5°C per minute.

The first cooling rate may be constant or may vary during the first cooling step.

The aging temperature may be at least 50°C or at least 100°C below the γ' solvus temperature for the precipitation strengthened alloy.

The predetermined heat treatment schedule may further comprise an aging step, wherein the intermediate article is held at the aging temperature for a second predetermined period of time.

The second predetermined period of time may be shorter than, longer than or the same as the first predetermined period of time.

The predetermined heat treatment schedule may comprise a second cooling step, wherein the intermediate article is cooled at a second cooling rate of more than 20°C per minute from the aging temperature to ambient temperature.

The second cooling step may be carried out subsequent to the or an aging step.

The second cooling rate may be at least 50°C per minute.

The second cooling rate may be constant or may vary during the second cooling step.

Subsequent to the second cooling step, one or more further aging heat treatments may be carried out on the intermediate article. The or each further aging heat treatment may comprise holding the intermediate article at a predetermined temperature for a predetermined period of time.

The predetermined heat treatment schedule may be carried out at least in part at elevated pressure. The solution treatment step and/or the first cooling step may be carried out at an elevated pressure.

The solution treatment step may comprise a hot isostatic pressing (HIP) process.

The precipitation strengthened alloy may be a precipitation strengthened nickel alloy, e.g. γ' strengthened nickel superalloy.

The precipitation strengthened nickel alloy may further comprise one or more of: chromium; cobalt; molybdenum; titanium; aluminium; iron; manganese; silicon; and carbon.

The precipitation strengthened alloy may comprise up to or at least 40 wt% nickel, up to or at least 50 wt% nickel, up to or at least 60 wt% nickel, or up to or at least 70 wt% nickel.

The precipitation strengthened alloy may comprise at least 8 wt% chromium. The precipitation strengthened alloy may comprise up to or at least 15 wt%, up to or at least 20 wt%, or up to or at least 25 wt% chromium. The precipitation strengthened alloy may comprise up to 30 wt% chromium.

The precipitation strengthened alloy may comprise at least 4 wt% cobalt. The precipitation strengthened alloy may comprise up to or at least 10 wt%, up to or at least 15 wt%, up to or at least 20 wt% or up to or at least 25 wt% cobalt. The precipitation strengthened alloy may comprise up to 30 wt% cobalt.

The precipitation strengthened alloy may comprise at least 0.5 wt% molybdenum. The precipitation strengthened alloy may comprise up to or at least 5 wt% molybdenum or up to or at least 10 wt% molybdenum. The precipitation strengthened alloy may comprise up to 15 wt% molybdenum.

The precipitation strengthened alloy may comprise up to or at least 1 wt%, up to or at least 1.5 wt%, up to or at least 2 wt%, or up to or at least 2.5 wt% titanium. The precipitation strengthened alloy may comprise up to 5 wt% titanium.

The precipitation strengthened alloy may comprise at least 0.1 wt% aluminium. The precipitation strengthened alloy may comprise up to or at least 0.3 wt%, up to or at least 0.6 wt%, up to or at least 1 wt%, up to or at least 1.5 wt%, or up to or at least 2 wt% aluminium. The precipitation strengthened alloy may comprise up to 7 wt% aluminium.

The precipitation strengthened alloy may comprise up to or at least 0.5 wt% iron. The precipitation strengthened alloy may comprise up to or at least 0.7 wt% or up to or at least 1.5 wt% iron. The precipitation strengthened alloy may comprise up to 2 wt% iron.

The precipitation strengthened alloy may comprise up to or at least 0.2 wt%, up to or at least 0.3 wt%, up to or at least 0.6 wt%, or up to or at least 1 wt% manganese.

The precipitation strengthened alloy may comprise up to or at least 0.1 wt%, up to or at least 0.15 wt%, up to or at least 0.4 wt%, or up to or at least 1 wt% silicon.

The precipitation strengthened alloy may comprise up to or at least 0.01 wt%, up to or at least 0.06 wt%, up to or at least 0.08 wt%, or up to or at least 0.2 wt% carbon.

The precipitation strengthened alloy may have a nominal composition consisting essentially of:

| Element | Weight % |
|---|---|
| Nickel | Balance (approximately 57) |
| Chromium | 20 |
| Cobalt | 10 |
| Molybdenum | 8.5 |
| Titanium | 2.1 |
| Aluminium | 1.5 |
| Iron | No more than 1.5 |
| Manganese | No more than 0.3 |
| Silicon | No more than 0.15 |
| Carbon | 0.06 |
| Boron | 0.005 |

The precipitation strengthened alloy may have a nominal composition consisting essentially of:

| Element | Weight % |
|---|---|
| Nickel | Balance |
| Chromium | From 19 to 21 |
| Cobalt | From 19 to 21 |
| Molybdenum | From 5.6 to 6.1 |
| Copper | Up to 0.2 |
| Carbon | From 0.01 to 0.08 |
| Manganese | Up to 0.6 |
| Silicon | Up to 0.4 |
| Phosphorus | Up to 0.015 or up to 0.7 |
| Sulphur | Up to 0.007 or up to 2.4 |
| Iron | Up to 0.7 |
| Titanium | From 1.9 to 2.4 |
| Aluminium | From 0.3 to 0.6 |
| Aluminium + Titanium | From 2.4 to 2.8 |
| Boron | Up to 0.005 |
| Bismuth | Up to 0.0001 |

The method of manufacture may further comprise a preliminary step of manufacturing the intermediate article.

A second aspect provides a method of manufacture of an article or component comprising:
providing an intermediate article or component comprising, or consisting essentially of, a precipitation strengthened alloy; and
treating the intermediate article or component in accordance with a predetermined heat treatment schedule comprising:
   a solution treatment step, wherein the intermediate article is held at a solution temperature for a first predetermined period of time, the solution temperature being above a γ' solvus temperature and below a solidus temperature for the precipitation strengthened alloy, wherein the solution temperature is less than 150°C below the solidus temperature.

The predetermined heat treatment schedule may further comprise:
a first cooling step, wherein the intermediate article is cooled from the solution temperature to an aging temperature, the aging temperature being below the γ' solvus temperature for the precipitation strengthened alloy; and
an aging step, wherein the intermediate article is held at the aging temperature for a second predetermined period of time.

In the first cooling step the intermediate article may be cooled at a first cooling rate of up to 20°C per minute.

A third aspect a method of manufacture of an article or component comprising:
providing an intermediate article or component comprising, or consisting essentially of, a precipitation strengthened alloy; and
treating the intermediate article or component in accordance with a predetermined heat treatment schedule comprising:
   a solution treatment step, wherein the intermediate article is held at a solution temperature for a first predetermined period of time, the solution temperature being above a γ' solvus temperature and below a solidus temperature for the precipitation strengthened alloy, wherein the solution temperature is less than 150°C below the solidus temperature; and
   a first cooling step, wherein the intermediate article is cooled at a first cooling rate of up to 20°C per minute from the solution temperature to an aging temperature, the aging temperature being below the γ' solvus temperature for the precipitation strengthened alloy.

The predetermined heat treatment schedule may further comprise an aging step, wherein the intermediate article is held at the aging temperature for a second predetermined period of time.

A fourth aspect provides a method of manufacture of an article or component comprising:
providing an intermediate article or component comprising, or consisting essentially of, a precipitation strengthened alloy; and
treating the intermediate article or component in accordance with a predetermined heat treatment schedule comprising:
   a solution treatment step, wherein the intermediate article is held at a solution temperature for a first predetermined period of time, the solution temperature being above a γ' solvus temperature and below a solidus temperature for the precipitation strengthened alloy; and
   a first cooling step, wherein the intermediate article is cooled at a first cooling rate from the solution temperature to an aging temperature, the aging temperature being below the γ' solvus temperature for the precipitation strengthened alloy;
wherein the solution treatment step and/or the first cooling step is carried out at elevated pressure.

The solution treatment step may comprise a hot isostatic pressing (HIP) process.

The first cooling rate may be up to 20°C per minute. The first cooling rate may be up to or at least 5°C per minute.

The predetermined heat treatment schedule may further comprise an aging step, wherein the intermediate article is held at the aging temperature for a second predetermined period of time.

The aging step may be carried out at atmospheric or ambient pressure.

A fifth aspect provides a method of manufacture of an article or component comprising:
providing an intermediate article or component comprising, or consisting essentially of, a precipitation strengthened alloy; and
treating the intermediate article or component in accordance with a predetermined heat treatment schedule comprising:
   a solution treatment step, wherein the intermediate article is held at a solution temperature for a first period of time, the solution temperature being above a γ' solvus temperature and below a solidus temperature for the precipitation strengthened alloy;
wherein the solution treatment step is carried out at elevated pressure.

The solution treatment step may comprise a hot isostatic pressing (HIP) process.

The solution temperature may be less than 150°C below the solidus temperature. The solution temperature may be no more than 125°C, no more than 100°C or no more than 80°C below the solidus temperature.

A sixth aspect provides a method of manufacture of an article or component comprising:
providing an intermediate article or component comprising, or consisting essentially of, a precipitation strengthened alloy; and
treating the intermediate article or component in accordance with a predetermined heat treatment schedule comprising:
   a solution treatment step, wherein the intermediate article is held at a solution temperature for a first predetermined period of time, the solution temperature being above a γ' solvus temperature and below a solidus temperature for the precipitation strengthened alloy; and
   a first cooling step, wherein the intermediate article is cooled at a first cooling rate of up to 20°C per minute from the solution temperature to ambient temperature.

The first cooling rate may be up to or at least 5°C per minute.

The first cooling rate may be constant or may vary during the first cooling step.

Subsequent to the first cooling step, one or more aging heat treatments may be carried out on the intermediate article. The or each aging heat treatment may comprise holding the intermediate article at a predetermined temperature for a predetermined period of time.

The predetermined heat treatment schedule may be carried out at least in part at an elevated pressure.

A seventh aspect provides an article or component manufactured according to a method of the first aspect, the second aspect, the third aspect, the fourth aspect, the fifth aspect or the sixth aspect.

An eighth aspect provides a gas turbine engine comprising an article or component of the seventh aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** illustrates an example of a heat treatment;
**Figure 2** shows a microstructure of an additively manufactured article consisting essentially of a precipitation strengthened nickel alloy following a standard wrought heat treatment;
**Figure 3** shows a microstructure of an additively manufactured article consisting essentially of a precipitation strengthened nickel alloy following a heat treatment as exemplified by Figure 1;
**Figure 4** shows another microstructure of an additively manufactured article consisting essentially of a precipitation strengthened nickel alloy following a heat treatment as exemplified by Figure 1; and
**Figure 5** is a sectional side view of a gas turbine engine.

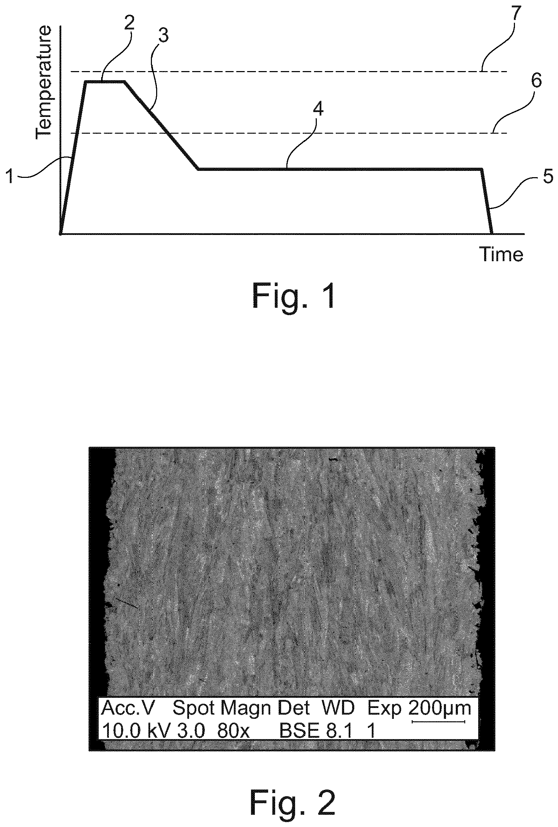

Figure 1 illustrates an example of a heat treatment that may be applied to an intermediate article consisting essentially of a precipitation strengthened nickel alloy. Temperature is on the y-axis and time is on the x-axis. A first dashed line 7 indicates the γ' solvus temperature for the precipitation strengthened nickel alloy. A second dashed line 6 indicates the solidus temperature for the precipitation strengthened nickel alloy.

Generally, the heat treatment comprises a heating step 1, a solution treatment step 2, a first cooling step 3, an aging step 4 and a second cooling step 5.

The intermediate article is placed in a furnace in an inert atmosphere. In the first heating step 1, the temperature of the furnace is ramped up to a solution treatment temperature. The solution temperature is selected such that it is above the γ' solvus temperature and below the solidus temperature for the precipitation strengthened nickel alloy. The solution temperature may be less than 150°C, no more than 125°C, no more than 100°C or no more than 80°C below the solidus temperature. The solution temperature may vary depending upon, among other things, the composition of the precipitation strengthened nickel alloy. For example, the solution temperature may be at least 1200°C and/or up to 1300°C. The solution temperature may be approximately 1250°C.

In the solution treatment step 2, the intermediate article is held at the solution temperature for a first predetermined period of time. The first predetermined period of time may vary depending upon, among other things, the composition of the precipitation strengthened nickel alloy. For example, the first predetermined period of time may be up to or at least 15 minutes, up to or at least 30 minutes, up to or at least one hour, up to or at least two hours, or up to or at least four hours. The first predetermined period of time may be approximately one hour.

In the first cooling step 3, the intermediate article is cooled in the furnace at a relatively slow rate to an aging temperature. The aging temperature is below the γ' solvus temperature of the precipitation strengthened nickel alloy. The cooling rate and/or aging temperature may vary depending upon, among other things, the composition of the precipitation strengthened nickel alloy. In the first cooling step 3, the intermediate article may be cooled at a rate of up to or at least 5°C per minute and/or up to 20°C per minute. For example, the intermediate article may be cooled at a rate of approximately 10°C per minute. The cooling rate may be constant or may vary during the first cooling step 3. The aging temperature may be at least 50°C or at least 100°C below the γ' solvus temperature for the precipitation strengthened nickel alloy. The aging temperature may be approximately 790°C. The aging temperature may be approximately 700°C. The aging temperature may be up to or at least 500°C, up to or at least 600°C, up to or at least 700°C, up to or at least 800°C or up to or at least 900°C.

In the aging step 4, the intermediate article is held at the aging temperature for a second predetermined period of time. The aging step 4 may be of a longer duration or a shorter duration than the solution treatment step 2, i.e. the second predetermined period of time may be longer or shorter than the first predetermined period of time. The aging step 4 may be of the same duration as the solution treatment step 2, i.e. the second predetermined period of time may be the same as the first predetermined period of time. The second predetermined period of time may be at least an hour, up to or at least two hours, up to or at least 6 hours, up to or at least 12 hours or up to or at least 24 hours. For example, the second predetermined period of time may be approximately eight hours. The second predetermined period of time may vary depending upon, among other things, the composition of the precipitation strengthened nickel alloy.

In the second cooling step 5, the intermediate article is cooled from the aging temperature to ambient temperature (e.g. room temperature) at a relatively fast rate, e.g. at least 50°C per minute. Gas fan quenching or air cooling may be utilised to cool the intermediate article at such a fast rate. The cooling rate may be constant or may vary during the second cooling step 5.

The intermediate article may have been manufactured using an additive manufacturing process such as additive layer manufacturing. After the heat treatment, and one or more optional machining and/or finishing steps, a finished article may be provided. The finished article may form a component or a part thereof for use in a gas turbine engine, e.g. of an aircraft.

As a result of the first cooling step 3 being carried out at a relatively slow rate, the heat treatment may not require a stabilisation or primary aging step to be carried out at a temperature between the solution temperature and the aging temperature.

The solution temperature may be relatively high compared with known heat treatments for precipitation strengthened nickel alloys, in which the solution temperature is typically 150°C or more below the solidus temperature.

In an embodiment, the intermediate article may be cooled at a relatively slow rate from the solution temperature to ambient temperature (e.g. room temperature) without being held for a period of time at an aging temperature between the solution temperature and ambient temperature. Thus, in an embodiment, the heat treatment may not include the aging step 4 and the second cooling step 5.

In an embodiment, the heat treatment may be carried out at least in part at an elevated pressure. For instance, the solution treatment step 2 may be carried out at an elevated pressure.

The solution treatment step 2 may comprise a hot isostatic pressing (HIP) process. Thus, a HIP step may be combined with the solution treatment step 2. Conventionally, the HIP step would be carried out prior to solution heat treatment.

The aging step 4 may be carried out at atmospheric pressure.

Figure 2 shows a microstructure of an additively manufactured article consisting essentially of a precipitation strengthened nickel alloy following a standard wrought heat treatment.

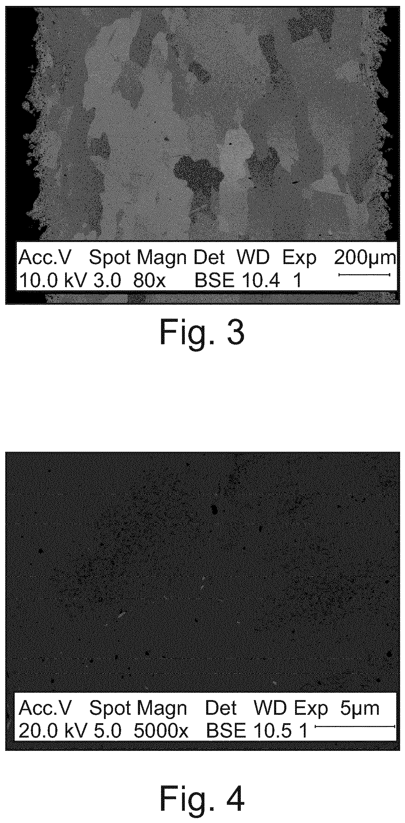

Figure 3 shows a microstructure of an additively manufactured article consisting essentially of a precipitation strengthened nickel alloy following a heat treatment as exemplified by Figure 1 and described above.

Figure 4 shows another microstructure of an additively manufactured article consisting essentially of a precipitation strengthened nickel alloy following a heat treatment as exemplified by Figure 1 and described above.

The articles shown in Figures 2, 3 and 4 consist essentially of the same precipitation strengthened nickel alloy. The alloy has the nominal composition set out in Table 1.

**Table 1**

| Element | Weight % |
|---|---|
| Nickel | Balance (approximately 57) |
| Chromium | 20 |
| Cobalt | 10 |
| Molybdenum | 8.5 |
| Titanium | 2.1 |
| Aluminium | 1.5 |
| Iron | No more than 1.5 |
| Manganese | No more than 0.3 |
| Silicon | No more than 0.15 |
| Carbon | 0.06 |
| Boron | 0.005 |

The microstructures shown in Figure 3 and Figure 4 exhibit desired grain growth for high temperature capability.

The microstructures shown in Figure 3 and Figure 4 have a multimodal γ' distribution.

The microstructures shown in Figure 3 and Figure 4 have coarser secondary γ', whereas the microstructure shown in Figure 2 has very fine tertiary γ'. The tertiary γ' of Figure 2 may coarsen during service, e.g. in a hot section of a gas turbine engine, which may result in loss of performance. The microstructures shown in Figure 3 and Figure 4 have coarsened during heat treatment. Consequently, a material of known properties can be put into service, which won't lose performance further.

The microstructures shown in Figure 3 and Figure 4 have serrated grain boundaries. Serrated grain boundaries may improve resistance to crack growth.

The microstructures shown in Figure 3 and Figure 4 comprise discrete carbides. In contract, the microstructure of Figure 2 comprises continuous carbides or chains of carbides.

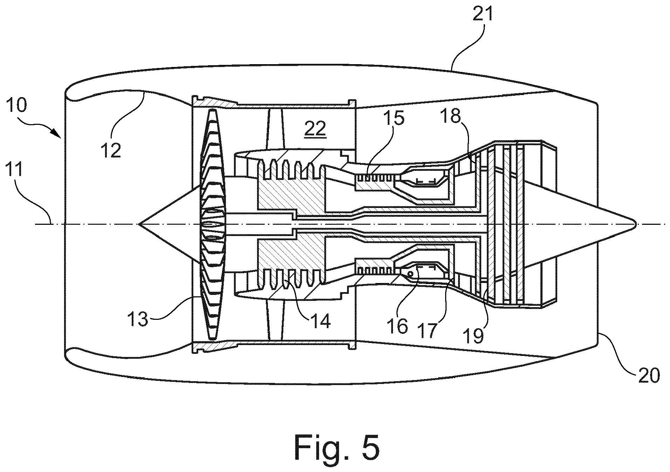

With reference to Figure 5, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Articles manufactured in accordance with this disclosure may be suitable for use as components in a wide variety of applications within a gas turbine engine, e.g. an aircraft gas turbine engine. More particularly, such articles may be suitable for use as components in the hot section of an aircraft gas turbine engine. Such articles may be suitable for use as components in compressor, combustor and/or turbine sections of a gas turbine engine. Such articles may be suitable for use as exhaust and nozzle components.

Examples of components comprising, or consisting essentially of, articles manufactured in accordance with this disclosure may include rings, casings and liners for use in compressor, combustor and/or turbine sections of a gas turbine engine.

Articles manufactured in accordance with this disclosure may be suitable for use as components in land-based turbine applications.

Employing a higher solution temperature (e.g. less than 150°C, no more than 125°C, no more than 100°C or no more than 80°C less than the solidus temperature) may help to achieve recovery and recrystallisation of the microstructure. Further, it may help to achieve desired grain growth for high temperature capability.

Employing a higher solution temperature and/or a slower cooling rate may help to produce a microstructure having a multimodal γ' distribution, which may comprise relatively coarse secondary γ'. Further, the microstructure may comprise serrated grain boundaries, which may provide resistance to crack growth. The microstructure may comprise discrete carbides.

The heat treatment of the present disclosure typically may not include a stabilisation step or primary aging step.

It will be understood that the invention is not limited to the embodiments described above and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. A method of manufacture of an article or component comprising:
providing an intermediate article or component comprising, or consisting essentially of, a precipitation strengthened alloy; and
treating the intermediate article or component in accordance with a predetermined heat treatment schedule comprising:
a solution treatment step (2), wherein the intermediate article is held at a solution temperature for a first predetermined period of time, the solution temperature being above a γ' solvus temperature (7) and below a solidus temperature (6) for the precipitation strengthened alloy; and
a first cooling step (3), wherein the intermediate article is cooled at a first cooling rate of up to 20°C per minute from the solution temperature to an aging temperature, the aging temperature being below the γ' solvus temperature (7) for the precipitation strengthened alloy.

2. A method of manufacture according to claim 1, wherein the predetermined heat treatment schedule further comprises an aging step (4), wherein the intermediate article is held at the aging temperature for a second predetermined period of time.

3. A method of manufacture according to any one of the preceding claims, wherein the predetermined heat treatment schedule further comprises a second cooling step, wherein the intermediate article is cooled from the aging temperature to ambient temperature at a relatively fast rate, e.g. at least 50°C per minute.

4. A method of manufacture according to claim 3, wherein subsequent to the second cooling step one or more further aging heat treatments are carried out on the intermediate article.

5. A method of manufacture according to any one of the preceding claims, wherein the predetermined heat treatment schedule is carried out at least in part at an elevated pressure.

6. A method of manufacture according to any one of the preceding claims, wherein the solution treatment step (2) comprises a hot isostatic pressing (HIP) process.

7. A method of manufacture according to any one of the preceding claims further comprising a preliminary step of manufacturing the intermediate article.

8. A method of manufacture according to claim 7, wherein the intermediate article is manufactured using an additive manufacturing process such as additive layer manufacturing.

9. A method of manufacture according to any one of the preceding claims, wherein the precipitation strengthened alloy is a precipitation strengthened nickel alloy.

10. A method of manufacture of an article or component comprising:
providing an intermediate article or component comprising, or consisting essentially of, a precipitation strengthened alloy; and
treating the intermediate article or component in accordance with a predetermined heat treatment schedule comprising:
a solution treatment step (2), wherein the intermediate article is held at a solution temperature for a first predetermined period of time, the solution temperature being above a γ' solvus temperature (7) and below a solidus temperature (6) for the precipitation strengthened alloy, wherein the solution temperature is less than 150°C below the solidus temperature (6).

11. A method of manufacture of an article or component comprising:
providing an intermediate article or component comprising, or consisting essentially of, a precipitation strengthened alloy; and
treating the intermediate article or component in accordance with a predetermined heat treatment schedule comprising:
a solution treatment step (2), wherein the intermediate article is held at a solution temperature for a first predetermined period of time, the solution temperature being above a γ' solvus temperature (7) and below a solidus temperature (6) for the precipitation strengthened alloy; and
a first cooling step (3), wherein the intermediate article is cooled at a first cooling rate from the solution temperature to an aging temperature, the aging temperature being below the γ' solvus temperature (7) for the precipitation strengthened alloy;
wherein the solution treatment step (2) and/or the first cooling step (3) is carried out at elevated pressure.

12. A method of manufacture of an article or component comprising:
providing an intermediate article or component comprising, or consisting essentially of, a precipitation strengthened alloy; and
treating the intermediate article or component in accordance with a predetermined heat treatment schedule comprising:
a solution treatment step (2), wherein the intermediate article is held at a solution temperature for a first period of time, the solution temperature being above a γ' solvus temperature (7) and below a solidus temperature (6) for the precipitation strengthened alloy;
wherein the solution treatment step (2) is carried out at elevated pressure.

13. A method of manufacture of an article or component comprising:
providing an intermediate article or component comprising, or consisting essentially of, a precipitation strengthened alloy; and
treating the intermediate article or component in accordance with a predetermined heat treatment schedule comprising:
a solution treatment step (2), wherein the intermediate article is held at a solution temperature for a first predetermined period of time, the solution temperature being above a γ' solvus temperature (7) and below a solidus temperature (6) for the precipitation strengthened alloy; and
a first cooling step (3), wherein the intermediate article is cooled at a first cooling rate of up to 20°C per minute from the solution temperature to ambient temperature.

14. An article or component manufactured according to a method of any one of the preceding claims.

15. A gas turbine engine (10) comprising an article or component according to claim 20.
